# EUROPEAN PATENT SPECIFICATION

(11) **EP 2 119 203 B1**
(45) Date of publication and mention of the grant of the patent: **02.03.2011**
(21) Application number: 07826293.8
(22) Date of filing: 06.09.2007
(51) Int. Cl.: H04M 1/73, H04M 1/60

(54) **BATTERY SAVING SELECTIVE SCREEN CONTROL**
BATTERIESPARENDE SELEKTIVE BILDSCHIRMSTEUERUNG
COMMANDE SÉLECTIVE D'ÉCRAN POUR ÉCONOMISER LA BATTERIE

(30) Priority: 09.03.2007 US 684391
(43) Date of publication of application: 18.11.2009
(73) Proprietor: Sony Ericsson Mobile Communications AB, 221 88 Lund (SE)
(72) Inventor: FOXENLAND, Eral Denis, SE-217 41, Malmö (SE)
(74) Representative: Winqvist, Jens Pontus
(86) International application number: PCT/IB2007/053600
(87) International publication number: WO 2008/110877

(56) References cited:
- EP-A- 0 883 274
- JP-A- 10 065 598
- JP-A- 2001 045 146

## Description

### BACKGROUND

Over the past several years, the portability and convenience of mobile telephones has led to an increase in the popularity of mobile telephones. Because users can make or receive phone calls without the limitations of traditional land lines, many individuals carry their mobile phones with them substantially all of the time. In fact, many individuals do not even have land lines in their homes and therefore use their mobile phones as their primary telephones.

One of the major drawbacks of a mobile phone is its limited battery life. Users are forced to repeatedly charge the batteries of their mobile phones or conserve battery power by turning their mobile phones off while not in use. This can be burdensome if a user forgets to turn off his mobile phone and runs out of battery power or if the user forgets to turn on his mobile phone and misses important phone calls.

JP 2001 045146 concerns how to obtain a communication terminal device that reduces power consumption by making a displaying part assume an inactive state as soon as possible just after starting speech communication by detecting the sound pressure level of a voice signal and interrupting power supply when the detected sound pressure level surpasses a prescribed value. Voice outputted by a speaker is collected by a microphone and converted from an analog signal into a digital signal by an A/D converter. The digital signal outputted by the converter is inputted to a sound pressure detecting part that decides that the speaker performs communication without looking at a displaying part when the signal surpasses a certain fixed level, a power supply for the displaying part is controlled so as to be an inactive state, and power supply to a back light and the displaying part is interrupted. Thus, it is possible to interrupt power supply to the part just after starting speech communication and to reduce power consumption.

JP 10 065598 discloses how to reduce power consumption by stopping power supply to a display section during a speech. A power switch is controlled by a control section to activate/interrupt a power supply to a display section. Upon the receipt of a power supply from a battery via the power switch, the display section displays various information sent from the control section. A voice detection section detects a speech voice from a microphone. A key entry section is operated at a speech start and its end. The control section decides a speech state by the detection of a voice and key depression by touching the portable telephone set to an ear, the control section stops power supply to the display section and when the control section decides that the speech is finished, power is supplied to the display section.

### SUMMARY

The present invention concerns a method comprising the steps recited in claim 1 and a mobile phone comprising the features recited in claim 9. Further embodiments of the invention are given in the dependent claims

### BRIEF DESCRIPTION OF THE DRAWING

The accompanying drawings, which are incorporated in and constitute a part of this specification, illustrate one or more embodiments described herein and, together with the description, explain these embodiments. In the drawings:
Fig. 1 is a diagram of an exemplary device in which systems and methods described herein may be implemented;
Fig. 2 is a diagram of exemplary components of the exemplary device of Fig. 1; and
Figs. 3-4 are flowcharts of exemplary processes according to implementations described herein.

### DETAILED DESCRIPTION

The following detailed description refers to the accompanying drawings. The same reference numbers in different drawings may identify the same or similar elements. Also, the following detailed description does not limit the invention.

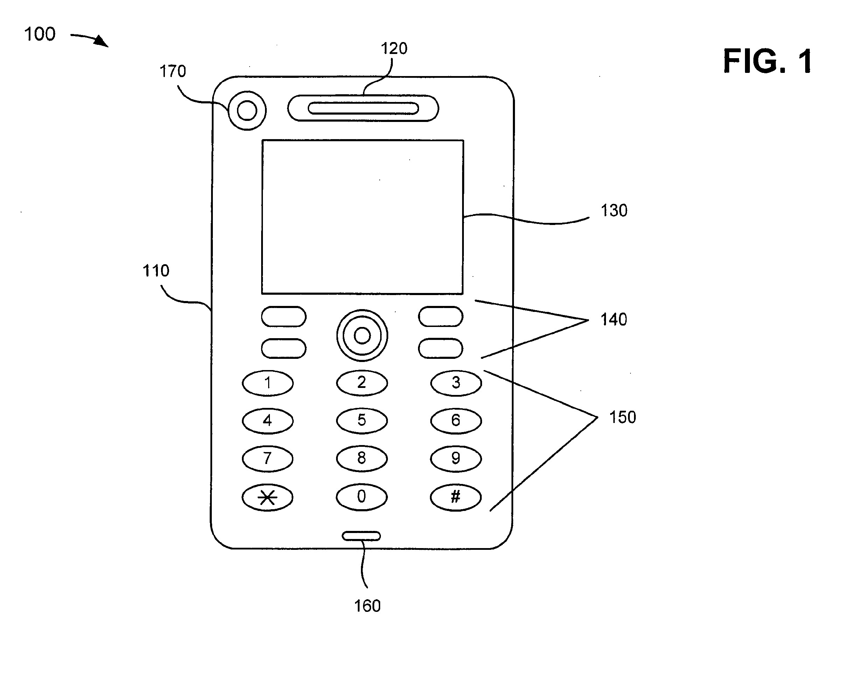

Fig. 1 is a diagram of an exemplary mobile phone 100 according to an implementation described herein. As shown in Fig. 1, mobile phone 100 may include a housing 110, a speaker 120, a display 130, control buttons 140, a keypad 150, a microphone 160, and a camera 170. Housing 110 may protect the components of mobile phone 100 from outside elements. Speaker 120 may provide audible information to a user of mobile phone 100 or to microphone 160. Display 130 may provide visual information to the user. For example, display 130 may provide information regarding reminders, incoming or outgoing calls, media, games, phone books, the current time, etc. In one implementation, display 130 may turn off when it is detected that mobile phone 100 is near the user's ear. Control buttons 140 may permit the user to interact with mobile phone 100 to cause mobile phone 100 to perform one or more operations. Keypad 150 may include a standard telephone keypad and/or a standard QWERTY keyboard. Microphone 160 may receive audible information from the user and from speaker 120. Camera 170 may enable a user to capture and store video and/or images (e.g., pictures).

Although Fig. 1 shows exemplary components of mobile phone 100, in other implementations, mobile phone 100 may include additional, different, or fewer components than depicted in Fig. 1. For example, mobile phone 100 may include a touch screen (e.g., display 130 may be a touch screen) that may permit the user to interact with mobile phone 100 to cause mobile phone 100 to perform one or more operations. The touch screen may be manipulated by touching or contacting the display with a pen or a finger. In still other implementations, one or more components of mobile phone 100 may perform the functions of one or more other components of mobile phone 100.

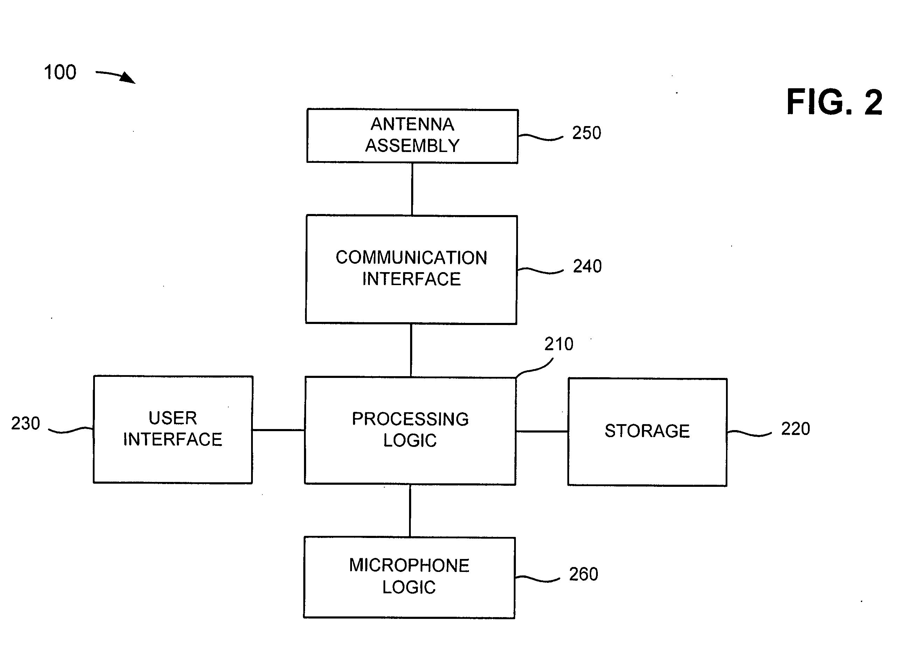

Fig. 2 is a diagram of exemplary functional components of mobile phone 100. As shown in Fig. 2, mobile phone 100 may include processing logic 210, storage 220, a user interface 230, a communication interface 240, an antenna assembly 250, and microphone logic 260. Microphone logic 260 may include circuitry associated with microphone 160 (Fig. 1). Processing logic 210 may include a processor, microprocessor, an application specific integrated circuit (ASIC), field programmable gate array (FPGA), or the like. Storage 220 may include a random access memory (RAM), a read only memory (ROM), and/or another type of memory to store data and instructions that may be used by processing logic 210 to control operation of mobile phone 100 and its components.

User interface 230 may include mechanisms for inputting information to mobile phone 100 and/or for outputting information from mobile phone 100. Examples of input and output mechanisms might include a speaker (e.g., speaker 120) to receive electrical signals and output audio signals, a camera (e.g., camera 170) to receive image and/or video signals and output electrical signals, buttons (e.g., a joystick, control buttons 140 and/or keys of keypad 150) to permit data and control commands to be input into mobile phone 100, a display (e.g., display 130) to output visual information (e.g., information from camera 170), and/or a vibrator to cause mobile phone 100 to vibrate.

Communication interface 240 may include, for example, a transmitter that may convert baseband signals from processing logic 210 to radio frequency (RF) signals and/or a receiver that may convert RF signals to baseband signals. Alternatively, communication interface 240 may include a transceiver to perform functions of both a transmitter and a receiver. Communication interface 240 may connect to antenna assembly 250 for transmission and reception of the RF signals. Antenna assembly 250 may include one or more antennas to transmit and receive RF signals over the air. Antenna assembly 250 may receive RF signals from communication interface 240 and transmit them over the air and receive RF signals over the air and provide them to communication interface 240.

Microphone logic 260 may detect the voice of the user or the voice of a caller from speaker 120 and communicate information to processing logic 210 that the user and/or caller are speaking. Processing logic 210 may then determine that mobile phone 100 is near the user's ear and turn off display 130 to conserve battery power. In some implementations, the voice of the caller associated with the call incoming to mobile phone 100 may be directly detected in the received wireless communication channel.

### EXEMPLARY PROCESSES

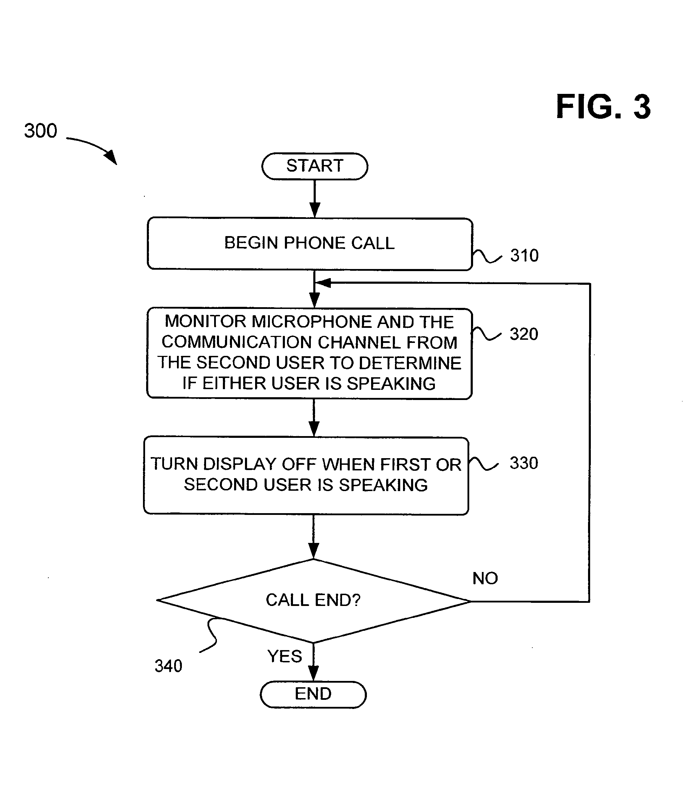

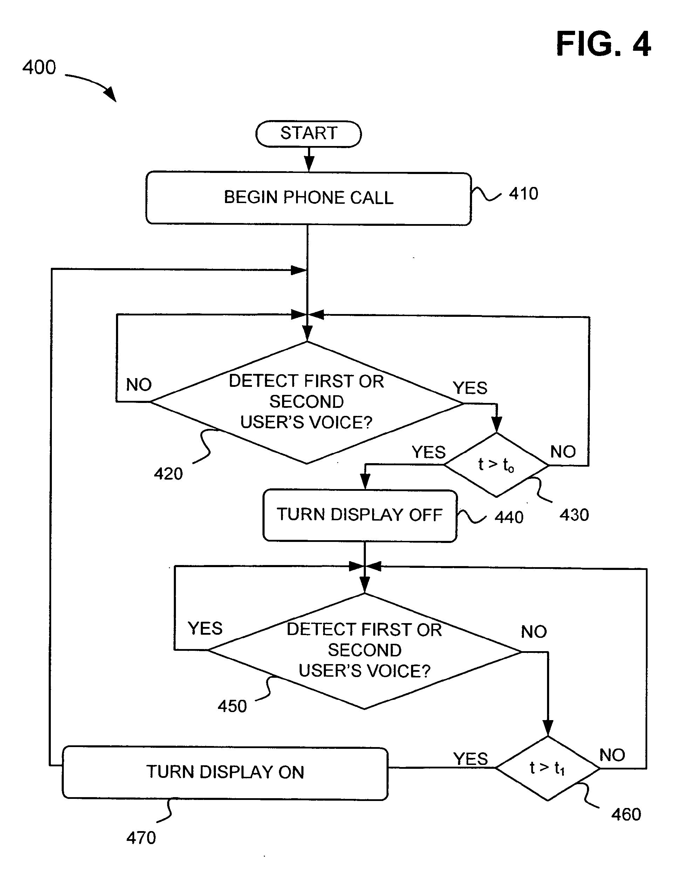

Figs. 3-4 are flowcharts of exemplary processes according to implementations described herein. The process of Fig. 3, in general, detects when a mobile phone is near a user's ear and saves power by turning off display 130 when the mobile phone is near a user's ear. Consistent with this, the process of Fig. 4 generally illustrates turning display 120 on/off during a conversation.

As shown in Fig. 3, process 300 may begin with the start of a phone conversation (block 310). A first user may receive a phone call on mobile phone 100 from a second user. The first user may answer the phone call without using the phone's "hands free" feature. For example, the first user may answer the phone by holding mobile phone 100 to the first user's ear and without using a headset (e.g. a Bluetooth™ wireless headset) or speakerphone. In another embodiment, the first user may use mobile phone 100 to initiate a phone call to a second user without using the mobile phone's "hands free" feature.

As further shown in Fig. 3, process 300 may continue by monitoring microphone 160 and the channel received from the second user to determine if either user is speaking (block 320). For example, in one implementation, microphone logic 260 and/or processing logic 210 may monitor the signal received by microphone 160 to determine if the first user is speaking. Processing logic 210 may also detect whether or not the second user is speaking by monitoring speaker 120 or by monitoring the communication channel from the second user received via communication interface 240.

When either the first user's voice or the second user's voice is detected (i.e. either is speaking), it may be assumed that mobile phone 100 is near the first user's ear, and display 130 may be turned off (block 330). In one embodiment, if both the first user and the second user are speaking at the same time, the display 130 may be turned off. In another embodiment, if the first and/or second user's voice is detected, the display 130 may turn off after a predetermined amount of time. In one implementation, the predetermined amount of time may be set or adjusted by the first user.

It may be determined whether the call has ended (block 340). If the call has ended (block 340 - YES), the monitoring of the users' voices may stop. If the call has not ended (block 340 - NO), the monitoring of the users' voices may continue.

A more in-depth explanation of the process of Fig. 3 is shown in Fig. 4. As shown in Fig. 4, process 400 may begin with the start of a phone call (block 410). As described above, in one embodiment, the phone call may begin when a first user receives a phone call on mobile phone 100 from a second user without using mobile phone 100's "hands free" feature. In another embodiment, the phone call may begin when the first user uses mobile phone 100 to initiate a phone call with a second user without using mobile phone 100's "hands free" feature. When the phone call begins, display 130 may be assumed to be on.

As further shown in Fig. 4, process 400 may continue with the detection of the first and/or second user's voice (block 420). As described above, processing logic 210 may monitor the first and/or second user's voice to determine if the first and/or second user is speaking. In one embodiment, if the sound level is above a predetermined threshold, it may be determined that the first and/or second user is speaking. In another embodiment, a moving average of the sound level may be calculated and if there is a sudden and substantial rise in the sound level, it may be determined that the first and/or second user is speaking. If the first and/or second user's voice is not detected (block 420 - NO), processing logic 210 may continue to monitor the first and/or second user's voice to determine if the first and/or second user is speaking. If the first and/or second user's voice is detected (block 420 - YES), it may be assumed that mobile phone 100 is near the first user's ear and the process may continue to block 430.

In block 430, it may be determined whether the first and/or second user has been speaking for a predetermined amount of time to. For example, the predetermined amount of time to may be the amount of time it takes for the first user to move mobile phone 100 to the first user's ear. In one embodiment, the first user may set or modify the predetermined amount of time to in storage 220. In another embodiment, the predetermined amount of time to may be calculated based on experimentation. If the predetermined amount of time to has not passed (block 430 - NO), mobile phone 100 may continue to monitor the first and/or second user's voice until the predetermined amount of time to has passed.

If the predetermined amount of time to has passed, display 130 may be turned off (block 430 - YES, block 440). Since, as described above, it may be assumed in this situation that mobile phone 100 is near the first user's ear, it may also be assumed that the first user is not looking at the display. Therefore, display 130 may be turned off to conserve battery power.

Display 130 may remain off as long as the first and/or second user is speaking. Processing logic 210 may continue to detect the first and/or second user's voice (block 450). In one embodiment, if the sound level continues to be above a predetermined threshold, it may be determined that the first and/or second user is speaking. In another embodiment, a moving average of the sound may be used to determine whether the first and/or second user is speaking. If the first and/or second user continues to speak (block 450 - YES), the display may remain off and the first and/or second user's voice may continue to be monitored. If the first and/or second user's voice is not detected (block 450 - NO), process 400 may continue to block 460.

In block 460, it may be determined whether or not a predetermined amount of time t₁ has passed since the first and/or second user stopped speaking. For example, the predetermined amount of time t₁ may be the amount of time it takes for the first user to move mobile phone 100 from the first user's ear. In one embodiment, the first user may set or modify the predetermined amount of time t₁ in storage 220. In another embodiment, the predetermined amount of time t₁ may be calculated based on experimentation. In one implementation, the predetermined amount of time t₁ may equal the predetermined amount of time to. In another implementation, the predetermined amount of time t₁ may not equal the predetermined amount of time to. If the predetermined amount of time t₁ has not passed (block 460 - NO), mobile phone 100 may continue to monitor the first and/or second user's voice until the predetermined amount of time t₁ has passed. If the predetermined amount of time t₁ has passed (block 460 - YES), display 130 may be turned on (block 470). The process of Fig. 4 may continue until the phone call has ended.

### CONCLUSION

Implementations described herein relate to the conservation of battery power in a cell phone. In one implementation, a display on a mobile phone may be turned off when it is determined that a first user (e.g., a caller) is speaking or a second user (e.g., the called party) is speaking. The display may be turned on if it is determined that the first user and the second user are not speaking.

The foregoing description provides illustration and description, but is not intended to be exhaustive or to limit the invention to the precise form disclosed. Modifications and variations are possible in light of the above teachings or may be acquired from practice of the invention.

For example, while series of acts have been described with regard to Figs. 3 and 4, the order of the acts may be modified in other implementations. Further, non-dependent acts may be performed in parallel.

It should be emphasized that the term "comprises / comprising" when used in the this specification is taken to specify the presence of stated features, integers, steps or components but does not preclude the presence or addition of one or more other features, integers, steps, components or groups thereof.

It will be apparent that aspects, as described above, may be implemented in many different forms of software, firmware, and hardware. The actual software code or specialized control hardware used to implement aspects described herein is not limiting of the invention. Thus, the operation and behavior of the aspects were described without reference to the specific software code--it being understood that one would be able to design software and control hardware to implement the aspects based on the description herein.

No element, act, or instruction used in the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A method for display control, the method comprising the step of:
monitoring a sound level of a voice of a first user of a mobile phone (100);
**characterized in that** it also comprises the steps of:
monitoring a sound level of a voice of a second user that is speaking to the first user via the mobile phone (100);
determining, based on the monitoring of the voices of the first user and the second user, whether the mobile phone (100) is near an ear of the first user; and
turning off a display (130) of the mobile phone (100) when it is determined that the mobile phone (100) is near the ear of the first user.

2. The method of claim 1, wherein the determining comprises the step of comparing the sound level of the voice of the first user or the sound level of the voice of the second user to a threshold.

3. The method of claim 2, wherein determining whether the mobile phone (100) is near the ear of the first user comprises the steps of:
determining that the mobile phone (100) is near the ear of the first user when the sound level of the voice of the first user is equal to or above the threshold or the sound level of the voice of the second user is above the threshold; and
determining that the mobile phone (100) is not near the ear of the first user when the sound level of the voice of the first user is below the threshold.

4. The method of claim 1, wherein the monitoring comprises the steps of:
monitoring the sound level of the voice of the first user and the sound level of the voice of the second user over a period of time; and
calculating a moving average of the sound levels over the period of time.

5. The method of claim 4, wherein determining whether the mobile phone (100) is near the ear of the first user comprises the steps of:
determining that the mobile phone (100) is near the ear of the first user when there is a sudden rise in the sound levels based on the moving average; and
determining that the mobile phone (100) is not near the ear of the first user when there is a sudden fall in the sound level of the voice of the first user based on the moving average.

6. The method of claim 1, wherein turning off the display (130) includes the step of turning off the display (130) after a first period of time.

7. The method of claim 1, further comprising the step of:
turning on the display (130) of the mobile phone (100) when it is determined that the mobile phone (100) is not near the ear of the first user.

8. The method of claim 7, wherein turning on the display (130) includes the step of turning on the display (130) after a second period of time.

9. A mobile phone (100) comprising:
a memory (220);
a display (130); and
processing logic (210) configured to:
monitor a sound level of a voice of a first user of a mobile phone (100);
**characterized in that** said mobile phone (100) is also configured to:
monitor the sound level of a voice of a second user that is speaking to the first user via the mobile phone (100);
determine, based on the monitoring of the sound levels of the voices of the first and second users, whether the mobile phone (100) is near an ear of the first user; and
turn off a display (130) of the mobile phone (100) when it is determined that the mobile phone (100) is near the ear of the first user.

10. The mobile phone (100) of claim 9, further comprising a microphone (160) for detecting the sound levels.

11. The mobile phone (100) of claim 9, wherein the processing logic (210) is further configured to compare the sound level of the voice of the first user or the sound level of the voice of the second user to a threshold.

12. The mobile phone (100) of claim 11, wherein the processing logic (210) is further configured to:
determine that the mobile phone (100) is near the ear of the first user when the sound level of the voice of the first user is equal to or above the threshold or the sound level of the voice of the second user is above the threshold; and
determine that the mobile phone (100) is not near the ear of the first user when the sound level of the voice of the first user is below the threshold.

13. The mobile phone (100) of claim 9, wherein the processing logic (210) is further configured to:
monitor the sound levels over a period of time; and
calculate a moving average of the sound levels over the period of time.

14. The mobile phone (100) of claim 13, wherein the processing logic (210) is further configured to:
determine that the mobile phone (100) is near the ear of the first user when there is a sudden rise in the sound levels based on the moving average; and
determine that the mobile phone (100) is not near the ear of the first user when there is a sudden fall in the sound level of the voice of the first user based on the moving average.

15. The mobile phone of claim 9, wherein the processing logic (210) is further configured to turn on the display (130) when it is determined that the mobile phone (100) is not near the ear of the first user.

## Patentansprüche

1. Verfahren zur Anzeigesteuerung, das Verfahren die Schritte umfassend:
Überwachen einer Lautstärke einer Stimme eines ersten Benutzers eines Mobiltelefons (100);
**dadurch gekennzeichnet, dass** es die Schritte umfasst:
Überwachen einer Lautstärke einer Stimme eines zweiten Benutzers, der mit dem ersten Benutzer über das Mobiltelefon (100) spricht;
Bestimmen, basierend auf der Überwachung der Stimmen des ersten Benutzers und des zweiten Benutzers, ob das Mobiltelefon (100) nahe eines Ohrs des ersten Benutzers ist; und
Ausschalten einer Anzeige (130) des Mobiltelefons (100),
wenn es bestimmt wird, dass das Mobiltelefon (100) nahe des Ohrs des ersten Benutzers ist.

2. Verfahren nach Anspruch 1, wobei das Bestimmen umfasst den Schritt des Vergleichens der Lautstärke der Stimme des ersten Benutzers oder der Lautstärke der Stimme des zweiten Benutzers mit einem Schwellwert.

3. Verfahren nach Anspruch 2, wobei Bestimmen, ob das Mobiltelefon (100) nahe des Ohrs des ersten Benutzers ist, die Schritte umfasst:
Bestimmen, dass das Mobiltelefon (100) nahe des Ohrs des ersten Benutzers ist, wenn die Lautstärke der Stimme des ersten Benutzers gleich oder über dem Schwellwert ist oder die Lautstärke der Stimme des zweiten Benutzers über dem Schwellwert ist; und
Bestimmen, dass das Mobiltelefon (100) nicht nahe des Ohrs des ersten Benutzers ist, wenn die Lautstärke der Stimme des ersten Benutzers unter dem Schwellwert ist.

4. Verfahren nach Anspruch 1, wobei das Überwachen die Schritte umfasst:
Überwachen der Lautstärke der Stimme des ersten Benutzers und der Lautstärke der Stimme des zweiten Benutzers über eine Zeitperiode; und
Berechnen eines gleitenden Mittelwerts der Lautstärken über die Zeitperiode.

5. Verfahren nach Anspruch 4, wobei Bestimmen, ob das Mobiltelefon (100) nahe des Ohrs des ersten Benutzers ist, die Schritte umfasst:
Bestimmen, dass das Mobiltelefon (100) nahe des Ohrs des ersten Benutzers ist, wenn es einen plötzlichen Anstieg in den Lautstärken gibt, basierend auf dem gleitenden Mittelwert; und
Bestimmen, dass das Mobiltelefon (100) nicht nahe des Ohrs des ersten Benutzers ist, wenn es einen plötzlichen Abfall in der Lautstärke der Stimme des ersten Benutzers gibt, basierend auf dem gleitenden Mittelwert.

6. Verfahren nach Anspruch 1, wobei Abschalten der Anzeige (130) den Schritt beinhaltet des Abschaltens der Anzeige (130) nach einer ersten Zeitperiode.

7. Verfahren nach Anspruch 1, ferner umfassend den Schritt:
Anschalten der Anzeige (130) des Mobiltelefons (100), wenn es bestimmt wird, dass das Mobiltelefon (100) nicht nahe des Ohrs des ersten Benutzers ist.

8. Verfahren nach Anspruch 7, wobei Anschalten der Anzeige (130) den Schritt beinhaltet des Anschaltens der Anzeige (130) nach einer zweiten Zeitperiode.

9. Mobiltelefon (100), umfassend:
einen Speicher (220);
eine Anzeige (130); und
Verarbeitungslogik (210) konfiguriert zum:
Überwachen einer Lautstärke einer Stimme eines ersten Benutzers eines Mobiltelefons (100);
**dadurch gekennzeichnet, dass** das Mobiltelefon (100) auch konfiguriert ist zum:
Überwachen der Lautstärke einer Stimme eines zweiten Benutzers, der mit dem ersten Benutzer über das Mobiltelefon (100) spricht;
Bestimmen, basierend auf der Überwachung der Lautstärken der Stimmen des ersten und zweiten Benutzers, ob das Mobiltelefon (100) nahe eines Ohrs des ersten Benutzers ist; und
Ausschalten einer Anzeige (130) des Mobiltelefons (100), wenn es bestimmt wird, dass das Mobiltelefon (100) nahe des Ohrs des ersten Benutzers ist.

10. Mobiltelefon (100) nach Anspruch 9, ferner umfassend ein Mikrofon (160) zum Erfassen der Lautstärken.

11. Mobiltelefon (100) nach Anspruch 9, wobei die Verarbeitungslogik (210) ferner konfiguriert ist, um die Lautstärke der Stimme des ersten Benutzers oder die Lautstärke der Stimme des zweiten Benutzers mit einem Schwellwert zu vergleichen.

12. Mobiltelefon (100) nach Anspruch 11, wobei die Verarbeitungslogik (210) ferner konfiguriert ist zum:
Bestimmen, dass das Mobiltelefon (100) nahe des Ohrs des ersten Benutzers ist, wenn die Lautstärke der Stimme des ersten Benutzers gleich oder über dem Schwellwert ist oder die Lautstärke der Stimme des zweiten Benutzers über dem Schwellwert ist; und
Bestimmen, dass das Mobiltelefon (100) nicht nahe des Ohrs des ersten Benutzers ist, wenn die Lautstärke der Stimme des ersten Benutzers unter dem Schwellwert ist.

13. Mobiltelefon (100) nach Anspruch 9, wobei die Verarbeitungslogik (210) ferner konfiguriert ist zum:
Überwachen der Lautstärken über eine Zeitperiode; und Berechnen eines gleitenden Mittelwerts der Lautstärken über die Zeitperiode.

14. Mobiltelefon (100) nach Anspruch 13, wobei die Verarbeitungslogik (210) ferner konfiguriert ist zum:
Bestimmen, dass das Mobiltelefon (100) nahe des Ohrs des ersten Benutzers ist, wenn es einen plötzlichen Anstieg in den Lautstärken gibt, basierend auf dem gleitenden Mittelwert; und
Bestimmen, dass das Mobiltelefon (100) nicht nahe des Ohrs des ersten Benutzers ist, wenn es einen plötzlichen Abfall in der Lautstärke der Stimme des ersten Benutzers gibt, basierend auf dem gleitenden Mittelwert.

15. Mobiltelefon nach Anspruch 9, wobei die Verarbeitungslogik (210) ferner konfiguriert ist, um die Anzeige (130) anzuschalten, wenn es bestimmt wird, dass das Mobiltelefon (100) nicht nahe des Ohrs des ersten Benutzers ist.

## Revendications

1. Procédé de commande de l'écran d'affichage, le procédé comprenant l'étape consistant à _{:}
surveiller un niveau sonore de la voix d'un premier utilisateur d'un téléphone mobile (100) ;
**caractérisé en ce qu'**il comprend en outre les étapes consistant à :
surveiller un niveau sonore de la voix d'un second utilisateur qui communique avec le premier utilisateur via le téléphone mobile (100) ;
sur la base de la surveillance des voix du premier et second utilisateur, déterminer si le téléphone mobile (100) est proche de l'oreille du premier utilisateur ; et
couper un écran d'affichage (130) du téléphone mobile (100) lorsqu'il est déterminé que le téléphone mobile (100) est proche de l'oreille du premier utilisateur.

2. Procédé selon la revendication 1, dans lequel l'étape de détermination comprend l'étape consistant à comparer avec un seuil le niveau sonore de la voix du premier utilisateur ou le niveau sonore de la voix du second utilisateur.

3. Procédé selon la revendication 2, dans lequel l'étape consistant à déterminer si le téléphone mobile (100) est proche de l'oreille du premier utilisateur comprend les étapes consistant à :
déterminer que le téléphone mobile (100) est proche de l'oreille du premier utilisateur lorsque le niveau sonore de la voix du premier utilisateur est égal ou supérieur au seuil ou lorsque le niveau sonore de la voix du second utilisateur est supérieur au seuil ; et
déterminer que le téléphone mobile (100) n'est pas proche de l'oreille du premier utilisateur lorsque le niveau sonore de la voix du premier utilisateur est inférieur au seuil.

4. Procédé selon la revendication 1, dans lequel l'étape de surveillance comprend les étapes consistant à :
surveiller le niveau sonore de la voix du premier utilisateur et le niveau sonore de la voix du second utilisateur sur une période de temps ; et
calculer une moyenne glissante des niveaux sonores sur la période de temps.

5. Procédé selon la revendication 4, dans lequel l'étape consistant à déterminer si le téléphone mobile (100) est proche de l'oreille du premier utilisateur comprend les étapes consistant à :
déterminer que le téléphone mobile (100) est proche de l'oreille du premier utilisateur lorsqu'il existe une montée brutale des niveaux sonores sur la base de la moyenne glissante ; et
déterminer que le téléphone mobile (100) n'est pas proche de l'oreille du premier utilisateur lorsqu'il y a une chute brutale du niveau sonore de la voix du premier utilisateur sur la base de la moyenne glissante.

6. Procédé selon la revendication 1, dans lequel la coupure de l'écran d'affichage (130) comprend l'étape consistant à couper l'écran d'affichage (130) après une première période de temps.

7. Procédé selon la revendication 1, comprenant en outre l'étape consistant à :
mettre l'écran d'affichage (130) du téléphone mobile (100) en service lorsqu'il est déterminé que le téléphone mobile (100) n'est pas proche de l'oreille du premier utilisateur.

8. Procédé selon la revendication 7, dans lequel l'étape de mise en service de l'écran d'affichage (130) comprend l'étape consistant à mettre l'écran d'affichage (130) en service après une seconde période de temps.

9. Téléphone mobile (100), comprenant :
une mémoire (220) ;
un écran d'affichage (130) ; et
une logique de traitement (210) configurée pour :
surveiller un niveau sonore de la voix d'un premier utilisateur d'un téléphone mobile (100) ;
**caractérisé en ce que** ledit téléphone mobile (100) est également configuré pour :
surveiller le niveau sonore de la voix d'un second utilisateur qui parle avec le premier utilisateur via le téléphone mobile (100) ;
sur la base de la surveillance des niveaux sonores des voix du premier et du second utilisateur, déterminer si le téléphone mobile (100) est proche de l'oreille du premier utilisateur ; et
couper un écran d'affichage (130) du téléphone mobile (100) lorsqu'il est déterminé que le téléphone mobile (100) est proche de l'oreille du premier utilisateur.

10. Téléphone mobile (100) selon la revendication 9, comprenant en outre un microphone (160) pour détecter les niveaux sonores.

11. Téléphone mobile (100) selon la revendication 9, dans lequel la logique de traitement (210) est en outre configurée pour comparer à un seuil le niveau sonore de la voix du premier utilisateur ou le niveau sonore de la voix du second utilisateur.

12. Téléphone mobile (100) selon la revendication 11, dans lequel la logique de traitement (210) est en outre configurée pour :
déterminer que le téléphone mobile (100) est proche de l'oreille du premier utilisateur lorsque le niveau sonore de la voix du premier utilisateur est égal ou supérieur au seuil ou lorsque le niveau sonore de la voix du second utilisateur est supérieur au seuil ; et
déterminer que le téléphone mobile (100) n'est pas proche de l'oreille du premier utilisateur lorsque le niveau sonore de la voix du premier utilisateur est inférieur au seuil.

13. Téléphone mobile (100) selon la revendication 9, dans lequel la logique de traitement (210) est en outre configurée pour :
surveiller les niveaux sonores sur une période de temps ; et
calculer une moyenne glissante des niveaux sonores sur la période de temps.

14. Téléphone mobile (100) selon la revendication 13, dans lequel la logique de traitement (210) est en outre configurée pour :
déterminer que le téléphone mobile (100) est proche de l'oreille du premier utilisateur lorsqu'il se produit une montée brutale des niveaux sonores sur la base de la moyenne glissante ; et
déterminer que le téléphone mobile (100) n'est pas proche de l'oreille du premier utilisateur lorsqu'il se produit une chute brutale du niveau sonore de la voix du premier utilisateur sur la base de la moyenne glissante.

15. Téléphone mobile (100) selon la revendication 9, dans lequel la logique de traitement (210) est en outre configurée pour mettre l'écran d'affichage en service (130) lorsqu'il est déterminé que le téléphone mobile (100) n'est pas proche de l'oreille du premier utilisateur.
